Europäisches Patentamt

European Patent Office

Office européen des brevets

(11) Numéro de publication: **0 215 688**
**B1**

(12) **FASCICULE DE BREVET EUROPEEN**

(45) Date de publication du fascicule du brevet:
24.05.89

(21) Numéro de dépôt: **86401624.1**

(22) Date de dépôt: **21.07.86**

(51) Int. Cl.⁴: **B 64 C 27/32**

(54) **Dispositif de butées de battement pour rotor de giravion.**

(30) Priorité: **22.07.85 FR 8511160**

(43) Date de publication de la demande:
**25.03.87 Bulletin 87/13**

(45) Mention de la délivrance du brevet:
**24.05.89 Bulletin 89/21**

(84) Etats contractants désignés:
**DE GB IT**

(56) Documents cités:
**FR-A- 2 427 251**
**GB-A- 2 116 506**

(73) Titulaire: **AEROSPATIALE SOCIETE NATIONALE INDUSTRIELLE, 37, Boulevard de Montmorency, F-75016 Paris (FR)**

(72) Inventeur: **Leman, Jean-Luc, Le Bel Ormeau Bâtiment C3 Avenue J.P. Coste, F-13100 Aix en Provence (FR)**
Inventeur: **Guimbal, Bruno, Rue du Château Moustier, F-13220 Chateauneuf Les Martigues (FR)**

(74) Mandataire: **Lepeudry-Gautherat, Thérèse et al, ARMENGAUD JEUNE CABINET LEPEUDRY 6, rue du Fg. St-Honoré, F-75008 Paris (FR)**

## Description

La présente invention concerne les dispositifs de butées de battement pour rotor de giravion.

L'invention a plus précisément pour objet un dispositif de butées de battement destiné à équiper une tête de rotor d'hélicoptère du type comprenant un moyeu de rotor qui, d'une part, est solidaire d'un mât de rotor destiné à être entraîné en rotation autour de son axe, confondu avec l'axe de rotation du rotor, et auquel, d'autre part, chacune des pales du rotor est reliée notamment par des organes de retenue et d'articulation de cette pale sur le moyeu, ces organes de retenue et d'articulation comprenant au moins deux armatures dont l'une, en position radiale externe par rapport à l'autre, est rigidement fixée sur le moyeu, tandis que l'autre armature, en position radiale interne, est solidaire en mouvement du pied de la pale.

Afin de limiter le fléchissement vers le bas des pales des rotors principaux, sous l'effet de leur poids propre, aux faibles vitesses de rotation et à l'arrêt des rotors, les têtes de rotor sont généralement équipées de butées de battement dites «butées basses», et un grand nombre de dispositifs différents de butée basse a déjà été proposé. La plupart des réalisations connues sont du type à butées escamotables en vol sous l'effet de la force centrifuge. Dans ce cas, il est souvent prévu, pour chaque pale, une butée montée pivotante sur la partie inférieure du moyeu, autour d'un axe qui peut être soit parallèle, soit perpendiculaire à l'axe de rotation du moyeu, et la butée porte une masselotte à l'extrémité d'un bras et est rappelée par un ressort en position de coopération avec un talon d'appui rigidement fixé sous le pied de la pale ou d'un organe de liaison de la pale au moyeu, de sorte que si la vitesse de rotation du rotor est supérieure à un seuil prédéterminé, les effets de la force centrifuge s'exerçant sur la masselotte font tourner la butée à l'encontre du ressort de rappel, de sorte que le talon d'appui ne puisse venir s'appuyer contre la butée, tandis que si la vitesse de rotation du rotor est inférieure au seuil, le ressort rappelle la butée en position permettant l'appui du talon, et limitant la flexion et les battements vers le bas de la pale correspondante. D'Autres réalisations de butées basses comportent des talons d'appui montés pivotants chacun sous le pied d'une pale ou sous l'organe de liaison de la pale au moyeu et rappelés par des ressorts, et ces talons d'appui sont escamotables sous l'effet de la force centrifuge, tandis que les butées avec lesquelles ces talons d'appui coopèrent sont des butées rigidement fixées sur la partie inférieure du moyeu ou sur la partie du mât qui est adjacente au moyeu. Dans ce dernier cas, l'ensemble des butées du moyeu ou du mât peut être constitué par un unique anneau de butée, fixé autour d'une partie inférieure du moyeu ou de la partie supérieure du mât, et contre lequel viennent s'appuyer tous les patins d'appui escamotables des pales. Il existe également des réalisations de butées basses dans lesquelles les talons d'appui des pales et les butées du moyeu ou du mât sont escamotables en vol sous l'effet de la force centrifuge. Un autre type de dispositif de butées basses pour un rotor principal d'hélicoptère comprend des talons d'appui rigidement fixés chacun sous le pied d'une pale ou sous l'organe de liaison de cette pale au moyeu, et une butée de battement centrale et commune, montée mobile autour du mât ou de la partie inférieure du moyeu, et contre laquelle tous les patins prennent appui lorsque la vitesse de rotation du moyeu est inférieure à un seuil. Cette butée centrale et commune est réalisée sous la forme d'un anneau rigide dit «anneau réciproque», dont le pourtour constitue une piste d'appui des patins, et qui est monté radialement ou latéralement coulissant dans un logement circulaire en forme de U ouvert radialement vers l'extérieur et fixé autour du mât ou de la partie inférieure du moyeu.

Un tel dispositif est décrit et représenté notamment dans le brevet français 2 427 251, dans lequel chaque talon d'appui est fixé sous l'extrémité radiale interne de la branche inférieure d'une partie fourchue d'attache de la pale correspondante au moyeu, cette partie d'attache fourchue étant soit un prolongement radial vers l'intérieur intégré au pied de la pale, soit constituée par une chape radiale à l'extrémité interne d'un organe rapporté de liaison au pied de la pale correspondante, cet organe rapporté présentant également, à son extrémité externe, une autre chape par laquelle il est accouplé au pied de la pale correspondante par deux axes sensiblement parallèles à l'axe de rotation du rotor, et dont l'un est amovible pour permettre de replier la pale dans le plan du rotor par pivotement autour de l'autre axe, cet organe rapporté pouvant être conformé en manchon logeant par exemple un dispositif de repliage automatique des pales.

Dans les deux cas, le talon d'appui est fixé sous l'extrémité interne de la branche inférieure de cette partie d'attache fourchue par les deux boulons qui fixent les extrémités radiales internes des deux branches de cette partie d'attache sur l'armature radiale interne d'une butée lamifiée sphérique qui constitue les moyens de retenue et d'articulation de la pale correspondante sur le moyeu.

Pour les hélicoptères embarqués sur des navires ou affectés à la desserte de plates-formes en mer, ou plus généralement destinés à opérer dans des zones géographiques où l'on rencontre des vents violents, il a été proposé d'équiper également leurs têtes de rotors principaux d'un dispositif de butées de battement limitant les débattements des pales vers le haut, sous l'effet des rafales de vent, lorsque le rotor est à l'arrêt ou lors de son lancement ou encore de son ralentissement. Ces dispositifs comprennent des butées de battement dites «butées hautes», le plus souvent constituées, pour chaque pale du rotor, d'un talon d'appui monté au-dessus du pied de pale ou d'un organe de liaison de la pale au moyeu, et qui est fixe ou escamotable en vol sous l'effet de la force centrifuge, et coopère avec une butée montée sur la partie supérieure du moyeu et qui est escamotable en vol sous l'effet de la force centrifuge ou fixe.

Par ailleurs, il a étét déjà prposé d'équiper également les rotors arrière d'hélicoptères de dispositifs de butées de battement, limitant les battements des pales de ces rotors arrière d'un côté et de l'autre de leur plan de rotation. Ces dispositifs comprennent le plus souvent pour chaque pale deux talons d'appui rigidement fixés sur le pied de la pale, respectivement en position axiale interne et en position axiale externe par rapport au pied de pale, tous les talons internes prenant appui contre un unique patin annulaire rigidement fixé en position axiale interne autour du moyeu ou du mât du rotor arrière pour limiter les battements des pales axialement vers l'intérieur par rapport à leur plan de rotation, et tous les talons externes prenant appui contre un autre patin annulaire, rigidement fixé en position axiale externe sur le moyeu du rotor arrière, pour limiter les battements des pales axialement vers l'extérieur rapport à leur plan de rotation.

On connaît aussi notamment par le GB-A 2 116 506 qui correspond aux caractéristiques selon le préambule de la revendication 1, un dispositif de butées de battement pour rotor d'hélicoptère comprenant pour chaque pale au moins un organe de butée solidaire en mouvement du pied de la pale, coopérant avec un organe de butée solidaire du moyen et/ou du mât du rotor, dispositif selon lequel chaque organe de butée solidaire en mouvement du pied d'une pale est porté par l'armature radiale interne des organes de retenue et d'articulation correspondants et en saillie sensiblement radialement vers l'intérieur.

Dans toutes ces réalisations de butées de battement, pour rotors principaux ou arrière, il est nécessaire de rapporter d'une part sur le moyeu et/ou sur le mât et, d'autre part, sur le pied de pale ou sur un organe de liaison du pied de pale au moyeu, un nombre relativement important de pièces, ce qui est un facteur d'augmentation de la masse, de l'encombrement, de la complexité, et donc du coût, au montage comme à l'entretien, de la tête de rotor.

De plus, dans ces réalisations connues, il est fréquent que des pièces essentielles de ces dispositifs de butée de battement soient des pièces mobiles en fonctionnement sur leur support, ce que est un facteur désavantageux sur le plan de la fiabilité et de la maintenance.

Par la présente invention, on se propose de remédier à ces inconvénients, et l'invention a pour objet un dispositif de butées de battement pour un rotor de giravion du type comprenant un moyeu de rotor, solidaire en rotation d'un mât-rotor autour d'un axe de rotation du rotor, et auquel chacune des pales du rotor est reliée par des organes de retenue et d'articulation de cette pale sur le moyeu, qui comprennent au moins deux armatures, dont l'une est rigidement fixée au moyeu, tandis que l'autre, en position radiale interne par rapport à l'autre, est solidaire en mouvement du pied de la pale correspondante, le dispositif de butée de battement comprenant, pour chaque pale, au moins un organe de butée solidaire en mouvement du pied de la pale et coopérant avec au moins un organe de butée solidaire du moyeu et/ou du mât afin de limiter les battements de la pale d'un côté au moins du plan de rotation des pales, chaque organe de butée solidaire en mouvement du pied d'une pale étant présenté par l'armature radiale interne des organes de retenue et d'articulation correspondants, et étant en saillie sensiblement radialement vers l'intérieur par rapport à cette armature radiale interne, et il se caractérise en ce que, pour chaque pale, au moins un organe de butée présenté par l'armature radiale interne correspondante est conformé en becquet d'une seule pièce avec cette armature et délimitant axialement d'une côté une portée de glissement en forme de calotte sphérique convexe sur la face radiale interne de cette armature, et le becquet présentant, en saillie vers l'extérieur de la portée de glissement convexe, une surface de butée tournée sensiblement vers l'intersection de l'axe de rotation du rotor et du plan de rotation des pales, l'organe de butée correspondant et solidaire du moyeu et/ou du mât présentant une surface d'appui sensiblement en regard de la surface de butée du becquet et délimitant d'un côté une portée de glissement concave, de courbure complémentaire à celle de la portée de glissement convexe, de sorte que les deux portées puissent glisser l'une sur l'autre, lors des battements de la pale correspondante, jusqu'à la venue de la surface de butée du becquet contre la surface d'appui en regard délimant la portée de glissement concave, afin de limiter les battements extrêmes autorisés pour la pale d'un côté au moins du plan de rotation des pales. Une telle réalisation permet, grâce à la coopération des deux portées de glissement sphériques complémentaires, le libre débattement des pales en pas et en traînée même aux faibles vitesses de rotation et à l'arrêt du rotor. Elle autorise également, rotor à l'arrêt, la vérification du libre débattement de la commande d'incidence.

Afin de limiter les battements des pales des deux côtés de leur plan de rotation, la portée de glissement convexe est, pour chaque pale, formée sur le fond d'un évidement usiné dans la face radiale interne de l'armature radiale interne correspondante et axialement délimité entre deux becquets, et la portée de glissement concave qui coopère avec cette portée de glissement convexe, est délimitée entre deux surfaces d'appui, de sorte que chacun des deux becquets viennent en contact par sa surface de butée contre l'une des deux surfaces d'appui, après glissement des deux portées l'une sur l'autre, lors des battements extrêmes autorisés pour la pale, d'un côté correspondant du plan de rotation des pales. Une telle réalisation est donc bien adaptée pour un rotor arrière, ou pour un rotor principal dont les pales doivent être limitées dans leur débattement non seulement vers le bas, sous l'effet de leur poids propre, mais également vers le haut, sous l'effet des rafales de vent et lorsque le rotor ne tourne pas à une vitesse de rotation suffisante pour que la force centrifuge appliqée sur les pales stabilise le disque rotor.

Dans une forme simplifiée de réalisation, les portées de glissement concaves de toutes les pales du rotor sont présentées par la surface latérale externe d'une unique butée de battement centrale, coaxiale au mât at au moyeu. Dans ce cas, il est avantageux que la butée de battement centrale soit un organe de révolution axiale à surface latérale externe concave délimitée entre deux surfaces tronconiques convergeant chacune axialement du côté opposé au centre de la butée de battement centrale et formant chacune les surfaces d'appui coopérant avec les surfaces de butée de tous les becquets situés axialement d'un même côté correspondant du centre de la butée centrale de battement. Cette réalisation permet non seulement de simplifier la coopération des portées de glissement convexes avec une unique portée de glissement concave et annulaire, mais également la coopération des becquets situés axialement d'un même côté du plan de rotation du rotor avec une unique surface d'appui annulaire et tronconique.

Dans un mode préféré de réalisation, les portées de glissement concaves sont formées par la surface latérale externe concave d'un palier auto-lubrifiant conformé en manchon logé dans une gorge périphérique ménagée dans la face latérale externe d'une pièce tubulaire, et entre les deux surfaces tronconiques d'extrémités axiales de cette pièce tubulaire, qui est portée par un support coaxial au mât et au moyeu.

Pour l'équipement des têtes de rotor dont le moyeu est tubulaire et ouvert du côté opposé au mât, le dispositif de butées de battement est avantageusement tel que la butée de battement centrale et son support, ainsi que les armatures radiales internes présentant les becquets et les portées de glissement convexes sont logés dans le moyeu, de sorte que ce dispositif de butées de battement est un dispositif interne au moyeu, ce qui diminue sa vulnérabilité.

Dans cet exemple de réalisation, si le moyeu tubulaire est au moins partiellement fermé par un chapeau, du côté opposé au mât, le support de la butée de battement centrale est avantageusement évasé et porte la butée de battement centrale à son extrémité resserrée, tandis qu'il est fixé par son extrémité évasée au chapeau fixé sur le moyeu tubulaire.

Mais, qu'un chapeau soit ou non fixé sur le moyeu tubulaire, il est également possible que le support de la butée de battement centrale comprenne une portée tubulaire d'appui contre la face interne du moyeu et/ou du mât, ainsi qu'un voile de centrage tubulaire qui est solidaire de la portée d'appui et qui supporte la butée de battement centrale.

Dans une forme de réalisation convenant à des structures compactes et simplifiées de têtes de rotor, l'armature radiale interne qui, pour chaque pale, présente la portée de glissement convexe et le ou les becquets correspondants, est l'armature radiale interne d'une butée sphérique lamifiée, qui constitue l'organe de retenue et d'articulation de la pale sur le moyeu.

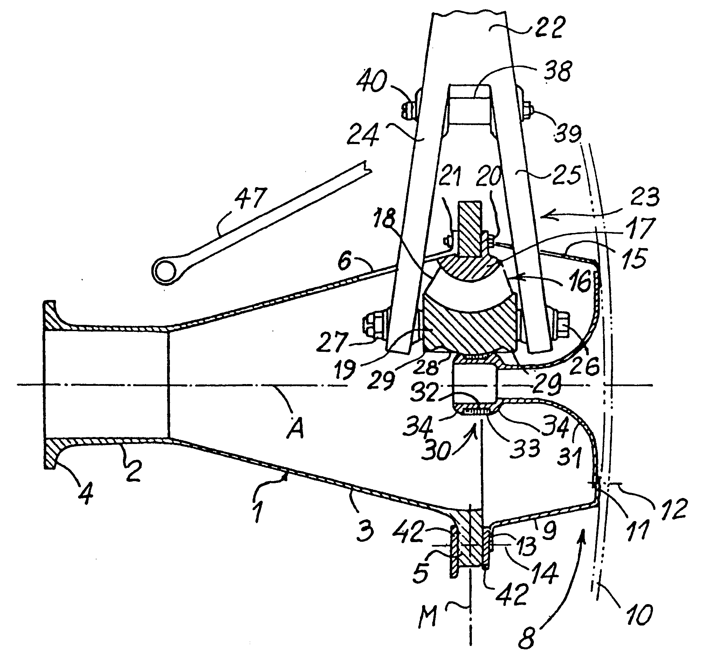

L'invention sera mieux comprise à l'aide de la description d'un exemple particulier de dispositif de butées de battement qui est donnée ci-dessous, à titre non limitatif, en référence à la figure unique annexée, représentant une vue schématique en coupe axiale d'une tête de rotor arrière tripale d'hélicoptère équipée d'un mât-moyeu intégré associé à trois pales non repliables, car c'est dans ce cadre d'application qu'un dispositif de butées de battement selon l'invention semble présenter le plus grand intérêt.

En référence à la figure unique, la tête de rotor arrière comporte un mât-moyeu intégré 1, essentiellement constitué d'un corps tubulaire monobloc, à symétrie de révolution autour d'un axe A, et dont la partie interne (par rapport au plan longitudinal de symétrie de l'hélicoptère, non représenté mais perpendiculaire à l'axe A sur la gauche de la figure unique) forme un mât tubulaire 2, tandis que sa partie externe forme un corps de moyeu tubulaire 3. Le mât 2 présente une forme générale extérieure cylindrique et son extrémité axiale interne est conformée en pied 4 constituée par une bride annulaire en saillie radialement vers l'extérieur du mât 2. Par ce pied 4, le mât 2 est fixé, à l'aide d'une couronne de boulons (non représentés) à un organe tubulaire (également non représenté) d'encastrement sur une boîte de transmission auxiliaire, montée à l'arrière de l'hélicoptère, et d'entraînement du mât-moyeu (1), et donc du rotor, en rotation autour de l'axe A, qui est également l'axe de rotation du rotor. Le mât 2 se raccorde à la partie formant corps de moyeu 3 et se prolonge directement par cette partie 3, qui présente une forme générale extérieure sensiblement tronconique et s'évase depuis le mât 2 jusqu'à son extrémité axiale externe libre, surépaissie localement et périphériquement en anneau circulaire de renforcement 5, de section transversale rectangulaire et en saillie radialement vers l'extérieur du corps de moyeu 3. L'anneau de renforcement 5 entoure ainsi l'ouverture circulaire de l'extrémité externe libre du corps de moyeu 3. Le corps tubulaire monobloc constitué par le mât 2 avec son pied 4 et par le corps de moyeu 3 avec son anneau 5 est métallique, par exemple en acier ou en titane, et est réalisé à partir d'une ébauche matricée ou forgée. Des ouvertures radiales 6, identiques et en nombre égal au nombre des pales du rotor, donc trois ouvertures 6 dans cet exemple, sont pratiquées dans la portion du corps du moyeu 3 qui est directement adjacente à l'anneau de renforcement 5 et sont régulièrement réparties en direction circonférentielle sur le pourtour de cette portion. L'extrémité axiale externe du corps de moyeu 3, présentant l'anneau 5, est recouverte par un chapeau 8 constitué d'une paroi latérale sensiblement tronconique 9 et d'une coupole 10 circulaire, légèrement bombé et présentant sa concavité vers le corps de moyeu 3. La couple 10, destinée à réduire la traînée aérodynamique du rotor, surtout au niveau du moyeu et du pied des pales, s'étend radialement bien au-delà de la paroi latérale 9 qui présente, du côté de sa petite base, en position axiale externe, une bride périphérique 11, rabattue radialement vers l'intérieur et contre laquelle la coupole 10 est fixée par une couronne d'ensembles vis-écrous d'axes 12. Du côté de sa grande base, la paroi latérale 9 du chapeau est solidarisée coaxialement au corps de moyeu 3 en étant fixée à l'anneau 5. A cet effet, la paroi latérale 9 présente trois brides 13 en arc de cercle, identiques et rabattues radialement vers l'extérieur à partir de la grande base de la paroi 9, et régulièrement réparties sur le pourtour de cette grand base, en étant chacun séparée des deux autres brides par une échancrure 15 ménagée dans la paroi 9 et ayant une forme sensiblement symétrique de celle des ouvertures 6 par rapport au plan transversal médian M de l'anneau 5. Le chapeau 8 est fixé au corps de moyeu 3 par des ensembles vis-écrou d'axes 14 liant les trois brides 13 à l'anneau 5, dans une position telle que chacune des trois échancrures 15, radiales et identiques les unes aux autres, se trouve axialement en regard de l'un des trois ouvertures identiques 6, en étant séparées de celle-ci par l'épaisseur de l'anneau 5. La face axiale externe de l'anneau 5 délimite ainsi avec les trois échancrures de la paroi 9 trois ouvertures radiales 15 dont chacune est sensiblement symétrique de l'une des trois ouvertures 6 par rapport à l'anneau 5. Le mât-moyeu 1 avec son chapeau 8 présente ainsi trois paires d'ouvertures radiales 6-15 régulièrement réparties sur son pourtour, les deux ouvertures 6, 15 de chaque paire étant axialement espacées de part et d'autre de l'anneau 5.

Chacune des trois pales du rotor est reliée à la partie formant corps de moyeu 3 par des organes de retenue et d'articulation. Ces derniers peuvent avantageusement comprendre au moins une butée lamifiée logée dans le corps de moyeu 3. Dans cet exemple, ces organes sont constitués par une butée sphérique lamifiée, permettant l'articulation de la pale sur le moyeu 3 autour de ses trois axes de battement, de traînée et de changement de pas, qui se coupent au point de rotulage déterminé par le centre de rotation de la butée sphérique lamifiée correspondante. Cet organe est un composant désormais bien connu, comprenant essentiellement une partie centrale lamifiée, constituée d'un empilement de couches en forme de calottes sphériques et alternativement rigides, par exemple métalliques, et en un matériau élastique, tel qu'un caoutchouc synthétique, par exemple en élastomère de silicone, cette partie centrale lamifiée étant vulcanisée entre deux armatures rigides, par exemple métalliques.

Dans l'exemple de réalisation représenté sur la figure unique, chaque butée lamifiée sphérique 16 est appliquée contre la face radiale interne de l'anneau de renforcement 5, entre les deux ouvertures 6 et 15 d'une paire d'ouvertures correspondantes, et la butée 16 est fixée contre l'anneau 5 par son armature radiale externe 17, conformée, dans sa partie externe, en étrier ouvert vers l'extérieur afin de chevaucher partiellement l'anneau 5. Par sa partie radiale interne, de forme convexe, l'armatue externe 17 est solidaire de la face externe concave de la partie centrale lamifiée 18 de cette butée 16, tandis que cette partie centrale lamifiée 18 est solidaire, par sa face interne convexe, de la partie radiale externe concave de l'armature interne 19. La butée sphérique 16 est disposée sous le chapeau 8 et à l'intérieur de l'ouverture de l'extrémité axiale externe du corps de moyeu 3, de sorte que son centre de rotation soit situé dans le plan médian M de l'anneau 5 et dans l'épaisseur de ce dernier, à proximité de sa face radiale externe, et la butée 16 est retenue en position à l'aide d'un boulon 20 introduit parallèlement à l'axe A et de l'extérieur du corps de moyeu 3 dans des trous alignés et percés dans l'anneau 5 et dans les deux branches de l'étrier de l'armature externe 17, un écrou 21 freiné ou goupillé étant vissé et retenu sur l'extrémité filetée de la tige du boulon 20 qui fait saillie du côté de l'ouverture 6.

Le pied de chaque pale 22 est conformé en partie d'attache fourchue 23 à deux branches axialement écartées, dont la branche interne 24 traverse l'ouverture interne 6 correspondante, et dont la branche externe 25 traverse l'ouverture externe 15 correspondante, les extrémités radiales internes des deux branches 24 et 25 étant fixées contre l'armature interne 19 de la butée sphérique 16 par un boulon 26, qui traverse axialement de l'extérieur des trous alignés percés dans l'armature interne 19 et dans ces extrémités internes des branches 24 et 25, la tête du boulon 26 étant en appui contre la branche externe 25, et un écrou 27 étant vissé et retenu par une goupille sur l'extrémité filetée de la tige du boulon 26 qui dépasse vers l'intérieur de la branche interne 24.

L'armature interne 19, reliant le pied fourchu 23 de la pale 22 à la butée sphérique 16, fait également fonction d'entretoise maintenant les deux branches 24 et 25 écartées avec un écartement constant.

Pour limiter les battements de la pale 22 de chaque côté du plan de rotation du rotor, sensiblement confondu avec le plan transversale M, un évidement dont le fond constitue une portée de glissement 28 en forme de calotte sphérique convexe, est ménagé dans la face radiale interne de l'armature radiale interne 19 de la butée sphérique lamifiée 16. Cette portée de glissement convexe 28 est délimitée sur cette face interne de l'armature 19, entre deux becquets 29, dont chacun est sensiblement en saillie radialement vers l'intérieur par rapport à la portée 28, et qui présentent chacun une face de butée inclinée et tournée vers l'intersection de l'axe A et du plan transversal M, cette face d'appui étant également sensiblement en saillie radialement vers l'intérieur par rapport à la portée 28. Cette portée de glissement 28 et les deux becquets 29 coopèrent avec une butée de battement centrale 30, qui est montée coaxialement à l'intérieur du mât-moyeu 1, grâce à un support tubulaire évasé 31. Par son extrémité axiale externe la plus évasée, ce support 31 est fixé contre la face axiale interne de la bride périphérique 11 de la paroi latérale 9 du chapeau 8, à l'aide des ensembles vis-écrous d'axes 12 qui fixent également la coupole 10 sur la paroi latérale 9, tandis que l'extrémité axiale interne la plus resserrée du support 31 est solidaire de la butée de battement 30. Celle-ci est un organe à symétrie de révolution axiale, comprenant une pièce tubulaire à section transversale circulaire qui est entourée d'un palier auto-lubrifiant 32, en forme de manchon dont la face latérale ou radiale externe constitue une portée de glissement 33 concave, à courbure complémentaire de celle de la portée convexe 28. Le palier 32 est logé dans un évidement circulaire ménagé dans la face radiale externe de la pièce tubulaire, entre deux surfaces annulaires et tronconiques d'appui 34, qui convergent du côté opposé au centre de la butée 30 confondu avec l'intersection du plan M et de l'axe A, et qui sont ainsi inclinées et tournées radialement vers l'extérieur et chacune vers l'un des deux becquets 29. Le dispositif de butées de battement ainsi réalisé, qui est entièrement interne au mât-moyeu 1, est tel que pour les déplacements angulaires extrêmes de battement autorisés pour la pale 22 d'un côté ou de l'autre du plan de rotation du rotor M, l'un des becquets 29 vient en butée contre la surface d'appui 34 en regard sur la butée de battement centrale 30, après glissement de la portée convexe 28 sur la portée concave 33 du palier 32 de cette butée centrale 30.

Par ailleurs, chaque pale 22 est amortie en traînée et rappelée élastiquement sur son axe neutre en traînée également par un organe de rappel élastique et d'amortissement (non représenté) externe au mât-moyeu 1 et disposé latéralement entre l'anneau de renforcement 5 et le pied de pale 23. Cet organe de traînée est accouplé, à ses extrémités, par des rotules d'une part sur le pied de pale 23 et d'autre part sur l'anneau 5. La rotule d'accouplement au pied de pale 23 est montée dans une chape portée latéralement par une entretoise 38 engagée entre les extrémités radiales externes des branches 24 et 25 du pied d'attache fourchue, et auxquelles l'entretoise 38 est fixée par deux ensembles à boulon 39 et écrou 40 groupillé ou freiné, dont les boulons 39 traversent des trous en regard percés dans les branches 24 et 25 et dans l'entretoise 38. Cette chape latérale est en saillie par rapport au pied de pale 23, du côté du bord de fuite de la pale 22 correspondante. La rotule d'accouplement de l'organe de rappel au moyeu 3 est montée entre deux ferrures d'attache 42, parallèles, fixées contre les faces de l'anneau 5 par les ensembles vis-écrous d'axes 14 qui fixent simultanément les brides 13 de la paroi 9 du chapeau 8 à l'anneau 5.

L'entretoise 38 se prolonge, du côté du bord d'attaque de la pale 22, par un levier de commande de l'incidence de la pale qui se termine par une chape dans laquelle s'articule, par une rotule, une extrémité d'une biellette 47 de commande du pas de la pale 22. Grâce à la coopération des deux portées de glissement complémentaires 28 et 33 du dispositif de butées de battement, on peut, par une action sur les biellettes 47, et sans avoir à exercer des efforts importants, manoeuvrer la commande d'incidence, à l'arrêt et aux faibles vitesses de rotation du rotor, pour en contrôler l'état.

On constate de plus que le dispositif de butées de battement est bien protégé dans le moyeu et très proche de l'axe A du rotor, sur lequel la butée centrale 30 est même centrée, sans gêner les mouvements des pales par rapport au mât-moyeu, autour des centres de rotation des butées sphériques lamifiées 16. En outre, ce dispositif de butées de battement ne comprend qu'un très faible nombre de pièces qui sont à rajouter aux organes par ailleurs nécessaires sur la tête de rotor, et l'encombrement de ce dispositif est très limité. On note, enfin, que si l'ouverture de l'extrémité libre du moyeu n'est pas partiellement fermée par un chapeau, la butée de battement centrale 30 peut être montée sur l'extrémité axiale externe et resserrée d'un voile de centrage sensiblement tronconique, disposé coaxialement dans le mât-moyeu, et dont l'extrémité axiale interne et élargie est solidaire d'une portée sensiblement tronconique d'appui et de fixation contre la face interne du mât-moyeu, de sorte que le support ainsi constitué pour la butée centrale 30 occupe une position axiale interne par rapport à cette butée 30 et se trouve directement fixé dans le mât-moyeu 1, contrairement à la solution représentée sur la figure unique.

## Revendications

1. Dispositif de butées de battement, pour rotor de giravion du type comprenant un moyeu (3) de rotor solidaire en rotation d'un mât-rotor (2) autour d'un axe de rotation du rotor (A), et auquel chacune des pales (22) du rotor est reliée par des organes de retenue et d'articulation (16) de cette pale (22) sur le moyeu (3) qui comprennent au moins deux armatures (17, 19) dont l'une (17) est rigidement fixée au moyeu (3), tandis que l'autre (19), en position radiale interne par rapport à la première (17), est solidaire en mouvement du pied (23) de la pale (22) correspondante, le dispositif de butées de battement comprenant, pour chaque pale (22), au moins un organe de butée (29) solidaire en mouvement du pied (23) de la pale, et coopérant avec au moins un organe de butée (34) solidaire du moyeu (3) et/ou du mât (2), afin de limiter les battements de la pale (22) d'un côté au moins du plan de rotation (M) des pales, chaque organe de butée (29) solidaire en mouvement du pied (23) d'une pale (22) étant porté par l'armature radiale interne (19) des organes de retenue et d'articulation correspondants (16), et étant en saillie sensiblement radialement vers l'intérieur par rapport à ladite armature radiale interne (19), caractérisé en ce que, pour chaque pale (22), au moins un organe de butée présenté par l'armature radiale interne correspondante (19) est conformé en becquet (29) d'une seule pièce avec ladite armature (19) et délimitant axialement d'un côté une portée de glissement (28) en forme de calotte sphérique convexe sur la face radiale interne de ladite armature (19), et le becquet (29) présentant, en saillie vers l'extérieur de la portée de glissement convexe (28), une surface de butée tournée sensiblement vers l'intersection de l'axe de rotation (A) du rotor et du plan de rotation (M) des pales, l'organe de butée (30) correspondant et solidaire du moyeu (3) et/ou du mât (2) présentant une surface d'appui (34) sensiblement en regard de la surface de butée du becquet (29) et délimitant axialement d'un côté une portée de glissement concave (33), de courbure complémentaire à celle de la portée de glissement convexe (28), de sorte que les deux portées (28, 33) puissent glisser l'une sur l'autre, lors des battements de la pale (22) correspondante, jusqu'à la venue de la surface de butée du becquet (29) contre la surface d'appui (34) en regard délimitant la portée de glissement concave (33), afin de limiter les battements extrêmes autorisés pour la pale (22) d'un côté au moins du plan de rotation (M) des pales.

2. Dispositif de butées de battement selon la revendication 1, caractérisé en ce que, pour chaque pale (22), la portée de glissement convexe (28) est formée sur le fond d'un évidement usiné dans la face radiale interne de l'armature radiale interne (19) correspondante et axialement délimité entre deux becquets (29), et en ce que la portée de glissement concave (33), qui coopère avec ladite portée de glissement convexe (28), est délimitée entre deux surfaces d'appui (34), de sorte que chacun des deux becquets (29) vienne en contact par sa surface de butée contre l'une des deux surfaces d'appui (34), après glissement des deux portées (28, 33) l'une sur l'autre, lors des battements extrêmes autorisés pour la pale d'un côté correspondant du plan de rotation des pales.

3. Dispositif de butées de battement selon la revendication 2, caractérisé en ce que les portées de glissement concaves de toutes les pales (22) du rotor sont présentées par la surface latérale externe (33) d'une unique butée de battement centrale (30) coaxiale au mât (2) et au moyeu (3).

4. Dispositif de butées de battement selon la revendication 3, caractérisé en ce que la butée de battement centrale (30) est un organe de révolution axiale à surface latérale externe concave (33) délimitée entre deux surfaces tronconiques (34) convergeant chacune axialement du côté opposé au centre de la butée de battement centrale (30) et formant chacune les surfaces d'appui coopérant avec les surfaces de butées de tous les becquets (29) situés axialement d'un même côté correspondant du centre de ladite butée de battement centrale (30).

5. Dispositif de butées de battement selon la revendication 4, caractérisé en ce que les portées de glissement concaves sont formées par la surface latérale externe concave (33) d'un palier auto-lubrifiant (32) conformé en manchon logé dans une gorge périphérique ménagée dans la face latérale externe d'une pièce tubulaire et entre les deux surfaces tronconiques d'extrémités axiales (34) de ladit pièce tubulaire qui est portée par un support (31) coaxial au mât (2) et au moyeu (3).

6. Dispositif de butées de battement selon l'une des revendications 3 à 5, pour un rotor de giravion, à moyeu tubulaire (3) ouvert du côté opposé au mât (2), caractérisé en ce que la butée de battement centrale (30) ainsi que les armatures radiales internes (19) présentant les becquets (29) et les portées de glissement convexes (28) sont logées dans le moyeu (3).

7. Dispositif de butées de battement selon la revendication 6, caractérisé en ce que le support (31) de la butée de battement centrale (30) est évasé et porte la butée de battement centrale (30) à son extrémité resserrée, tandis qu'il est fixé par son extrémité évasée à un chapeau (8) fixé au moyeu tubulaire (3) et le fermant au moins partiellement du côté opposé au mât (2).

8. Dispositif de butées de battement selon la revendication 6, caractérisé en ce que le support de la butée de battement centrale (30) comprend une portée tubulaire d'appui contre la face interne du moyeu (3) et/ou du mât (2) ainsi qu'un voile de centrage tubulaire qui est solidaire de la portée d'appui et qui supporte la butée de battement centrale (30).

9. Dispositif de butées de battement selon l'une des revendications 1 à 8, caractérisé en ce que, pour chaque pale (22), la portée de glissement convexe (28) et le ou les becquets (29) qui la délimitent sont formés sur l'armature radiale interne (19) d'une butée sphérique lamifiée (16) qui constitue les organes de retenue et d'articulation de la pale (22) sur le moyeu (3).

## Patentansprüche

1. Schlagbegrenzungsanschlagvorrichtung für einen Hubschrauberrotor des Typs bei dem eine Rotornabe (3) fest mit einem um eine Rotordrehachse (A) rotierenden Wellen-Rotor (2) verbunden ist und an dem jedes der Rotorblätter (22) auf der Nabe (3) mittels Halte- oder Gelenkvorrichtungen (16) dieses Rotorblattes (22) befestigt ist, welche mindestens zwei Befestigungselemente (17, 19) enthalten, von denen das eine (17) starr mit der Nabe (3) verbunden ist, während das andere (19), zum ersten (17) radial innen gelegen, bewegungsfest mit dem Fußende (23) des entsprechenden Rotorblattes verbunden ist, wobei die Schlagbegrenzungsanschlagvorrichtung für jedes Rotorblatt (22) mindestens ein bewegungsfest mit dem Fußende (23) des Rotorblattes verbundenes Anschlagselement (29) aufweist und mit mindestens einem mit der Nabe (3) und/oder der Achse (2) verbundenen Anschlagsvorrichtung (29) zusammenwirkt, um die Schläge des Rotorblattes (22) auf mindestens einer Seite der Rotationsebene (M) des Rotorblattes zu begrenzen, wobei jede Anschlagsvorrichtung (29), die bewegungsfest am Fußende (23) eines Rotorblattes befestigt ist, sich an dem radialen inneren Befestigungselement (19) der entsprechenden Halte- und Gelenkvorrichtungen (16) befindet und gegenüber dem radialen inneren Befestigungselement (19) deutlich nach innen vorragt, dadurch gekennzeichnet, daß für jedes Rotorblatt (22) mindestens ein Anschlagselement, welches an dem entsprechenden inneren Befestigungselement angebracht ist in Form eines Höckers (29) aus einem Stück mit dem Befestigungsstück (19) gefertigt ist und von einer Seite in Achsrichtung eine Gleitzone (28) in Form einer kugelförmigen konvexen Kalotte auf der radialen Innenseite des Befestigungselementes (19) begrenzt, wobei der Höcker (29) der nach außen aus der konvexen Gleitzone (28) herausragt eine Anschlagsfläche aufweist, welche ungefähr zum Schnittpunkt der Rotationsachse (A) des Rotors mit der Rotationsebene (M) der Rotorblätter zeigt, wobei die entsprechende fest mit der Nabe (3) und/oder Welle (2) verbundene Anschlagsvorrichtung eine Stoßfläche (34) etwa gegenüber dem Anschlag des Höckers aufweist und von einer Seite eine konkave Gleitzone (33) mit entgegengesetzter Krümmung zur konvexen Gleitzone (28) begrenzt, so, daß die beiden Zonen (28, 33) bei Schlägen des betreffenden Rotorblattes (22) aufeinander gleiten können, solange, bis die Anschlagsfläche des Höckers (29) gegen die gegenüberliegende, die konkave Gleitzone (33) begrenzende Stoßfläche (34) stößt um die äußersten Schläge, die für das Rotorblatt (22) nach einer Seite der Rotationsfläche (M) der Rotorblätter gerade noch zulässig sind, zu begrenzen.

2. Schlagbegrenzungsanschlagvorrichtung nach Anspruch 1, dadurch gekennzeichnet, daß für jedes Rotorblatt (22) die konvexe Gleitzone (28) auf dem Boden einer Vertiefung gebildet wird, die auf der radialen inneren Stirnseite des entsprechenden radialen inneren Befestigungselements geformt ist und in Achsrichtung von zwei Höckern (29) begrenzt wird und dadurch, daß die konkave Gleitzone (33), die mit der vorgenannten konvexen Gleitzone (28) zusammenwirkt, von zwei Stoßflächen (34) begrenzt wird, so, daß jeder der beiden Höcker (29) über seine Anschlagsfläche mit der einen der zwei Stoßflächen (34) in Kontakt kommt, nachdem die beiden Zonen (28, 33) bei den äußersten Schlägen, die für das Rotorblatt nach einer entsprechenden Seite der Rotationsebene der Rotorblätter zulässig sind, aufeinander geglitten sind.

3. Schlagbegrenzungsanschlagvorrichtung nach Anspruch 2, dadurch gekennzeichnet, daß die konkaven Gleitzonen aller Rotorblätter (22) von der seitlichen äußeren Fläche (33) eines einzigen, zentralen und koaxial zur Welle (2) und zur Nabe (3) gelegenen Schlagbegrenzungsanschlags (30) gebildet werden.

4. Schlagbegrenzungsanschlagvorrichtung nach Anspruch 3, dadurch gekennzeichnet, daß der zentrale Schlagbegrenzungsanschlag (30) eine axiale Drehvorrichtung mit seitlicher, äußerer konkaver Oberfläche (33) ist, die von zwei kegelstumpfartigen Oberflächen (34) begrenzt werden, die sich beide in axialer Richtung nach der entgegengesetzten Seite zum Mittelpunkt des zentralen Schlagbegrenzungsanschlags (30) einander annähern und wobei jede die Sroßflächen bildet, welche mit den Anschlagsflächen all der Höcker (29) zusammenwirken, die axial auf gleicher Seite vom Mittelpunkt des Schlagbegrenzungsanschlags (30) liegen.

5. Schlagbegrenzungsanschlagvorrichtung nach Anspruch 4, dadurch gekennzeichnet, daß die konkaven Gleitzonen von der seitlichen äußeren konkaven Fläche (33) eines selbstschmierenden Lagers (32) in Form einer Manschette gebildet werden, das in einer peripheren Rille sitzt, welche in der äußeren Seitenfläche eines röhrenförmigen Stückes und zwischen den beiden kegelstumpfförmigen Oberflächen der axialer Ränder (34) des röhrenförmigen Stückes liegt, welches von einem zur Welle (2) und zur Nabe (3) koaxialen Träger (31) gehalten wird.

6. Schlagbegrenzungsanschlagvorrichtung nach einem der Ansprüche 3 bis 5 für einen Hubschrauberrotor mit röhrenförmiger Nabe (3) und offen auf der der Welle (2) gegenüberliegenden Seite, dadurch gekennzeichnet, daß der zentrale Schlagbegrenzungsanschlag (30) ebenso wie die inneren radialen Befestigungselemente (19), welche die Höcker (29) und die konvexen Gleitzonen (28) tragen an der Nabe (3) befestigt sind.

7. Schlagbegrenzungsanschlagvorrichtung nach Anspruch 6, dadurch gekennzeichnet, daß der Träger (31) des Schlagbegrenzungsanschlags (30) konisch erweitert ist und der Schlagbegrenzungsanschlag (30) an seinem verengten Ende sitzt, wohingegen er mit seinem erweiterten Ende an einer Abdeckung (8) angebracht ist, welche an der röhrenförmigen Nabe (3) befestigt ist und diese zumindest teilweise an dem der Welle (2) gegenüberliegenden Ende abschließt.

8. Schlagbegrenzungsanschlagvorrichtung nach Anspruch 6, dadurch gekennzeichnet, daß der Träger des Schlagerbegrenzungsanschlags (30) eine röhrenförmige Stützkonstruktion an der Innenseite der Nabe (3) und/oder Welle (2) umfaßt sowie eine röhrenförmige Zentrierungshülse, die fest mit der Stützkonstruktion verbunden ist und den zentralen Schlagbegrenzungsanschlag (30) abstützt.

9. Schlagbegrenzungsanschlagvorrichtung nach einem der Ansprüche 1 bis 8, dadurch gekennzeichnet, daß für jedes Rotorblatt (22) die konvexe Gleitzone (28) und der oder die ihn begrenzenden Höcker (29) auf dem radialen inneren Befestigungselement (19) eines sphärischen geschichteten Anschlags (16) angebracht sind, der die Halte- und Gelenkvorrichtungen des Rotorblattes (22) auf der Nabe (3) enthält.

## Claims

1. Flapping restrainer device for a helicopter rotor of the type comprising a rotor hub (3) integral with a rotor pylon (2) in rotation about an axis of rotation of the rotor (A), and to which each one of the blades (22) of the rotor is connected by components for the retention and articulation (16) of this blade (22) on the hub (3) which comprise at least two frame members (17, 19), one (17) of which is rigidly fixed to the hub (3), while the other (19), in an internal radial position in relation to the first (17), is integral in movement with the root (23) of the corresponding blade (22), the flapping restrainer device comprising, for each blade (22), at least one restrainer component (29) integral in movement with the root (23) of the blade, and cooperating with at least one restrainer component (34) integral with the hub (3) and/or with the pylon (2), in order to limit the flappings of the blade (22) on at least one side of the plane of rotation (M) of the blades, each restrainer component (29) integral in movement with the root (23) of a blade (22) being carried by the internal radial frame member (19) of the corresponding retention and articulation components (16), and projecting substantially radially towards the inside in relation to the said internal radial frame member (19), characterized in that, for each blade (22), at least one restrainer component exhibited by the corresponding internal radial frame member (19) is conformed as a rim (29) in a single piece with the said frame member (19) and delimiting axially, on one side, a sliding bearing surface (28) in the form of a convex spherical dome on the internal radial face of the said frame member (19), and the rim (29) exhibiting, projecting towards the outside of the convex sliding bearing surface (28), a restrainer surface turned substantially towards the intersection of the axis of rotation (A) of the rotor and the plane of rotation (M) of the blades, the corresponding restrainer component (30), which is integral with the hub (3) and/or with the pylon (2), exhibiting a supporting surface (34) substantially opposite the restrainer surface of the rim (29) and delimiting axially, on one side, a concave sliding bearing surface (33), of curvature complementary to that of the convex sliding bearing surface (28), in such a manner that the two bearing surfaces (28, 33) can slide on one another, in the course of the flappings of the corresponding blade (22), until the restrainer surface of the rim (29) comes against the supporting surface (34) opposite, delimiting the concave sliding bearing surface (33), in order to limit the extreme flappings permitted for the blade (22) on at least one side of the plane of rotation (M) of the blades.

2. Flapping restrainer device according to claim 1, characterized in that, for each blade (22), the convex sliding bearing surface (28) is formed on the base of a recess machined in the internal radial face of the corresponding internal radial frame member (19) and axially delimited between two rims (29), and in that the concave sliding bearing surface (33), which cooperates with the said convex sliding bearing surface (28), is limited between two supporting surfaces (34), in such a manner that each one of the two rims (29) comes into contact, by its restrainer surface, against one of the two supporting surfaces (34), after sliding of the two bearing surfaces (28, 33) on one another, in the course of the extreme flappings permitted for the blade on a corresponding side of the plane of rotation of the blades.

3. Flapping restrainer device according to claim 2, characterized in that the concave sliding bearing surfaces of all the blades (22) of the rotor are exhibited by the external lateral surface (33) of a single central flapping restrainer (30) coaxial with the pylon (2) and with the hub (3).

4. Flapping restrainer device according to claim 3, characterized in that the central flapping restrainer (30) is a component of axial revolution having a concave external lateral surface (33) delimited between two frustoconical surfaces (34) each converging axially on the side opposite to the centre of the central flapping restrainer (30) and each forming the supporting surfaces cooperating with the restrainer surfaces of all the rims (29) situated axially on a same corresponding side of the centre of the said central flapping restrainer (30).

5. Flapping restrainer device according to claim 4, characterized in that the concave sliding bearing surfaces are formed by the concave external lateral surface (33) of a self-lubricating bearing (32) conformed as a sleeve received in a peripheral throat formed in the external lateral face of a tubular part and between the two axial ends frustoconical surfaces (34) of the said tubular piece which is carried by a support (31) coaxial with the pylon (2) and with the hub (3).

6. Flapping restrainer device according to one of claims 3 to 5, for a helicopter rotor, having a tubular hub (3) open on the side opposite to the pylon (2), characterized in that the central flapping restrainer (30) as well as the internal radial frame members (19) exhibiting the rims (29) and the convex sliding bearing surfaces (28) are accommodated in the hub (3).

7. Flapping restrainer device according to claim 6, characterized in that the support (31) of the central flapping restrainer (30) is flared and carries the central flapping restrainer (30) at its narrowed end, while it is fixed by its flared end to a cover (8) fixed to the tubular hub (3) and closing it at least partially on the side opposite to the pylon (2).

8. Flapping restrainer device according to claim 6, characterized in that the central flapping restrainer (30) comprises a tubular bearing surface for support against the internal face of the hub (3) and/or of the pylon (2) as well as a tubular centring shell which is integral with the supporting bearing surface and which supports the central flapping restrainer (30).

9. Flapping restrainer device according to one of claims 1 to 8, characterized in that, for each blade (22), the convex sliding bearing surface (28) and the rim or rims (29) which delimit it are formed on the internal radial frame member (19) of a laminated spherical restrainer (16) which constitutes the components for the retention and articulation of the blade (22) on the hub (3).